# EUROPÄISCHE PATENTSCHRIFT

(11) **EP 3 042 098 B1**
(45) Veröffentlichungstag und Bekanntmachung des Hinweises auf die Patenterteilung: **13.03.2019**
(21) Anmeldenummer: 14747685.7
(22) Anmeldetag: 06.08.2014
(51) Int. Cl.: B60G 7/00, F16F 7/12, F16F 1/368, F16F 1/26

(54) **HALTEELEMENT FÜR EINE FEDER**
HOLDING ELEMENT FOR A SPRING
ÉLÉMENT DE RETENUE D'UN RESSORT

(30) Priorität: 05.09.2013 DE 102013217769
(43) Veröffentlichungstag der Anmeldung: 13.07.2016
(73) Patentinhaber: ZF Friedrichshafen AG, 88046 Friedrichshafen (DE)
(72) Erfinder: KRAHN, Stefan, 49074 Osnabrück (DE); RUPFLIN, Thomas, 88719 Stetten (DE)
(86) Internationale Anmeldenummer: PCT/EP2014/066944
(87) Internationale Veröffentlichungsnummer: WO 2015/032576

(56) Entgegenhaltungen:
- EP-A1- 2 639 087
- DE-A1-102011 081 693

## Beschreibung

Die Erfindung betrifft ein Halteelement für eine Feder, insbesondere Blattfeder, gemäß dem Oberbegriff des Anspruchs 1. Des Weiteren betrifft die Erfindung eine Verwendung des Halteelements sowie ein Verfahren zur Herstellung eines Halteelements.

Federn, wie Blattfedern, werden im Fahrwerk häufig zur Federung von Rädern verwendet, um Fahrbahnunebenheiten auszugleichen und so die Fahreigenschaften eines Fahrzeugs zu verbessern. Dazu sind die Räder beziehungsweise die Radträger, an denen die Räder befestigt werden können, über Lenker und Federn mit der Karosserie verbunden. Blattfedern können die Räder und/oder die Radträger ebenfalls führen und halten, so dass die Räder in einer kontrollierten Lage relativ zum Fahrwerk und/oder der Karosserie positioniert sind.

Die Blattfeder wird im Stand der Technik über Halteelemente mit dem Radträger verbunden, damit auf die Räder wirkende Querkräfte bzw. Seitenkräfte auf die Blattfeder übertragen werden können.

Aus der nachveröffentlichten EP 2 639 087 A1 ist eine Radaufhängung mit einer Blattfeder bekannt. Die Blattfeder erstreckt sich innerhalb eines zentralen Fahrzeugbereichs in Fahrzeugquerrichtung. Jeweils endseitig ist die Blattfeder mit einem Querlenkerarm verbunden, der sich in Fahrzeugquerrichtung jeweils nach außen erstreckt und außenseitig gelenkig mit einem jeweiligen Radträger verbunden ist. Bei den Querlenkerarmen handelt es sich um steife Lenkerbauteile (vgl. dortiger [0022]), beispielsweise aus extrudiertem Aluminium. Die Querlenkerarme weisen an einem der Blattfeder zugewandten Ende einen parallel zur Fahrzeuglängsrichtung verlaufenden Durchgang auf, der zur Aufnahme eines Elastomerlagers dient, über welches der jeweilige Querlenkerarm gelenkig gegenüber dem Fahrzeugaufbau gelagert ist. Der Zusammenbau aus Blattfeder und daran angebauten Querlenkerarmen wird somit über die in den Querlenkerarmen angeordneten Elastomerlager gegenüber dem Fahrzeugaufbau gelagert.

Aus der DE 10 2011 081 693 A1 sind Halteelemente für radführende Blattfedern gemäß dem Oberbegriff des Anspruchs 1 bekannt, die Quer- und Seitenkräfte aufnehmen können. Darüber hinaus können in einem Verformungsbereich sehr hohe Kräfte aufgenommen werden, die bei einem Seitenaufprall entstehen können.

Es ist eine Aufgabe der Erfindung ein verbessertes Halteelement bereitzustellen.

Diese Aufgabe wird durch ein Halteelement nach Anspruch 1 gelöst. Bevorzugte Weiterbildungen sind in den Unteransprüchen gegeben.

Gelöst wird die Aufgabe mit einem Halteelement für eine Feder, wobei das Halteelement genau zwei Befestigungsbereiche aufweist, nämlich einen Federbefestigungsbereich zur Befestigung der Blattfeder an dem Halteelement mittels dem Federbefestigungsbereich zugeordneter erster Stege, um die Feder zu umgreifen, und einen Radträgerbefestigungsbereich zur Befestigung eines Radträgers an der Blattfeder, wobei das Halteelement einen mit Stegen und Aussparungen durchsetzten Verformungsbereich zur Kraftübertragung von dem Federbefestigungsbereich auf den Radträgerbefestigungsbereich aufweist. Die Lösung zeichnet sich dadurch aus, dass die Feder in Bezug auf eine das Halteelement in eine obere und eine untere Hälfte gliedernde Symmetrieebene von einem ersten Steg oberhalb und von einem ersten Steg unterhalb dieser Symmetrieebene umgriffen wird, wobei die zweiten Stege und die Aussparungen spiegelsymmetrisch in Bezug auf die Symmetrieebene ausgebildet sind, so dass zweite Stege und Aussparungen, die der oberen Hälfte des Halteelements zugeordnet sind, spiegelbildlich verlaufen zu zweiten Stegen und Ausparungen, die der unteren Hälfte des Halteelements zugeordnet sind.

Dabei ist der Radträgerbefestigungsbereich der Bereich des Halteelements, der zur Befestigung des Radträgers an dem Halteelement dient. Dabei kann der Radträgerbefestigungsbereich auch über mehrere weitere Elemente mit dem Radträger verbunden sein. Der Federbefestigungsbereich dient zur Befestigung der Blattfeder bzw. Feder an dem Halteelement. Auch dieser Bereich muss nicht direkt mit der Feder verbunden sein, sondern auch hier können zwischen Halteelement und Feder ein oder mehrere Elemente angeordnet sein. Vorzugsweise ist das Halteelement jedoch einstückig ausgebildet und Radträger sowie Feder sind unmittelbar mit dem Halteelement verbunden.

Anstatt die Feder direkt mit dem Radträger zu verbinden, ist der Feder ein separates Halteelement zugewiesen, über welche die Feder mit dem Radträger verbunden ist. Dabei ist es nicht notwendig, dass das Halteelement unmittelbar mit dem Radträger verbunden ist. Vielmehr sind auch Ausgestaltungen denkbar, bei denen zwischen dem Radträger und dem Halteelement ein oder mehrere Elemente angeordnet sind.

Die Feder kann insbesondere als Blattfeder, bevorzugt als Querblattfeder, ausgestaltet sein. Unter einer Blattfeder wird eine Feder verstanden, deren Hauptausbreitungsrichtung von der bevorzugten Federrichtung abweicht, insbesondere die Hauptausbreitungsrichtung im Wesentlichen senkrecht zur bevorzugten Federrichtung ist.

Die Blattfeder kann dabei aus einem oder mehreren Materialen bestehen, insbesondere Metall und/oder Kunststoff. Bevorzugt ist die Blattfeder und/oder Querblattfeder aus einem faserverstärktem Verbundwerkstoff (FVK), vorzugsweise glasfaserverstärkten Kunststoff. Bei letztgenannten Materialen kann die Feder nicht ohne weiteres mit Verbindungsbauteilen verbunden werden. Es ist zu berücksichtigen, dass eine Durchbohrung von FVK die Materialeigenschaften beeinflusst, und eine einfache Verschraubung des Endes einer durchbohrten FVK-Blattfeder mit z.B. einem Radträger den radseitigen Belastungen, insbesondere den Querkräften, nicht ausreichend Stand hält. Ein Halteelement umschließt die Feder, so dass trotzt Störung der Faserstruktur eine Durchbohrung der FVK-Feder zur hochbelastbaren Befestigung der Feder über das Halteelement möglich ist. Alternativ kann die Feder im Bereich ihrer Befestigung während Herstellung auch aufgedornt werden, so dass die Faserstruktur trotz Befestigungsloch in der Feder nicht gestört wird.

Insbesondere ist das Halteelement dabei so ausgeformt, dass bei einer Energieeinleitung, bei der die Feder z.B. durch eine missbräuchliche radträgerseitige Seiten- bzw. Querkraft Schaden nehmen könnte, das Halteelement gezielt deformiert wird und so die eingeleitete Energie zumindest teilweise innerhalb des Halteelements abgebaut wird und nur ein Teil der eingeleiteten Energie auf die Feder übertragen wird. So wird verhindert, dass die Feder beschädigt wird. Bevorzugt weist dabei der Verformung des Halteelements eine Form und Größe auf, dass die Feder über das Halteelement weiterhin mit dem Radträger verbunden ist und deshalb das Rad weiterhin über die Feder geführt werden kann und eine Weiterfahrt trotz der Verformung möglich ist. Bevorzugt soll auch ein Ausknicken des Radträgerbefestigungsbereichs gegenüber dem Federbefestigungsbereich verhindert werden, damit nur Seitenkräfte übertragen werden.

Die Kraft, bei welcher die Feder Schaden nehmen könnte, kann anhand der Kraftgröße, Richtung, Dauer etc. festgelegt werden. Auch ist es möglich, das Halteelement so anzupassen, dass die Beschädigung anderer, insbesondere der Feder nachfolgender Teile, wie Lager verhindert wird.

Besonders bevorzugt ist jedoch die Verformung des Halteelements am Fahrverhalten des Fahrzeugs deutlich spürbar und/oder auch sichtbar, so dass der Fahrzeuglenker auf den Schaden in des Halteelements durch das Fahrverhalten aufmerksam gemacht wird und so dazu veranlasst wird, diesen Schaden zu beheben. Durch die Verformung in des Halteelements wird dabei eine Schädigung der Feder verhindert, so dass lediglich im Schadensfall das Halteelement ausgewechselt werden muss und die in den meisten Fällen wesentlich teurere Feder beibehalten werden kann.

Bevorzugt wird durch die Verformung des Halteelements die Position der Befestigung des Radträgers an dem Halteelement in Bezug auf die Befestigung der Feder an dem Halteelement verschoben und so im Verwendungszustand des Halteelements die Radstellung, wie z.B. die Spur und/oder den Sturz, für den Fahrzeuglenker von außen sichtbar verändert.

Bevorzugt ist das Halteelement aus Metall, wie Stahl und/oder Leichtmetall, wie Aluminium, insbesondere in Form eines Stranggussbauteils. Jedoch sind auch Halteelemente aus Verbundmaterialien, wie faserverstärkten Kunststoff, insbesondere glasfaserverstärkten Kunststoff, denkbar.

Der Verformungsbereich ist so ausgestaltet, dass er sich bei geringen Seitenkräften bzw. bei Standardlastfällen elastisch verhält und es so im Normalbetrieb nicht zu dauerhaften Veränderungen der Radstellung kommt. Bei Missbrauchslasten tritt eine plastische Verformung ein, wenn eine Kraft, welche eine gewisse Grenzkraft überschreitet (Seitenkräfte größer als im Standardlastfall) und insbesondere zu einer Schädigung der Feder führen könnte, von dem Radträgerbefestigungsbereich auf den Federbefestigungsbereich übertragen wird. Durch Seitenkräfte kann das Halteelement so verformt werden, dass bei der Übertragung von Kräften, die im Standardlastfall liegen, kaum oder nur gering elastisch verformt und so eine stabile und gleichbleibende Führung der Räder ermöglicht ist. Wird eine Kraft in das Halteelement eingeleitet, die so groß ist, dass sie die Feder dauerhaft schädigen könnte (Missbrauchslast), so wird der Verformungsbereich des Halteelements plastisch verformt und damit die Energie durch die plastische Verformung abgebaut und nicht auf die nachfolgenden Bauteile, wie die Feder weitergeleitet.

Bevorzugt nähert sich durch die Verformung des Verformungsbereichs der Radträgerbefestigungsbereich an den Federbefestigungsbereich an. Durch die Verformung kann sich die Lage des Radträgers relativ zu der Feder ändern. Durch die veränderte Lage des Halteelements können die Räder in Vorspur oder Nachspur gehen oder aber der Radsturz verändert sich, je nach Befestigung des Halteelements an dem Radträger. Dies führt zu einem merklich veränderten Fahrverhalten bzw. zu einer von außen sichtbaren Veränderung des Radstands gegenüber der Karosserie.

Der Verformungsbereich ist so angeordnet, dass eine Kraft, die vom Radträgerbefestigungsbereich auf den Federbefestigungsbereich geleitet wird, mittels des Verformungsbereichs übertragen wird. Insbesondere verbindet der Verformungsbereich den Radträgerbefestigungsbereich mit dem Federbefestigungsbereich.

Der Verformungsbereich befindet sich in der Hauptausbreitungsrichtung der Feder zwischen dem Radträgerbefestigungsbereich und dem Federbefestigungsbereich. Der Federbefestigungsbereich ist dabei der Bereich, an dem die Feder an das Halteelement befestigt wird. Dabei kann die Feder im Befestigungsbereich durch das Halteelement umfasst werden und so von mehreren Seiten gehalten werden. Auch kann im Befestigungsbereich das Halteelement über ein Befestigungsmittel, wie einer Schraube, einem Niet oder auch einer Schelle, mit der Feder lösbar oder dauerhaft kraft- und/oder formschlüssig verbunden sein. Der Radträgerbefestigungsbereich ist dabei der Bereich, in dem das Halteelement so ausgebildet ist, dass sie mittelbar oder unmittelbar mit dem Radträger verbunden werden kann. Die Anordnung des Verformungsbereichs zwischen dem Radträgerbefestigungsbereich und dem Federbefestigungsbereich, bevorzugt entlang der Hauptausbreitungsrichtung der Feder, erlaubt es, das Halteelement so zu konzipieren, dass es als Verlängerung der Feder wirkt. Dies erlaubt die Verwendung des Halteelements auch in Federkonzepten bzw. Fahrwerken, in denen bisher keine oder kein solches Halteelement vorgesehen ist, da das Halteelement sich in Richtung der Feder erstrecken kann und so den Verlauf der Feder weiterführt.

Jedoch ist es auch möglich in der Hauptausbreitungsrichtung der Feder den Radträgerbefestigungsbereich neben oder versetzt zu dem Federbefestigungsbereich anzuordnen und so die Anordnung der Feder in verschiedenen Bauräumen zu ermöglichen.

Die Erfindung zeichnet sich dadurch aus, dass das Halteelement in Bezug auf seine Längsachse spiegelsymmetrisch ausgebildet ist. Diese ist insbesondere im Bereich des Verformungsbereiches und das Radträgerbefestigungsbereiches der Fall. Weitgehend betrifft dieses jedoch auch den Federbefestigungsbereich. Im Verformungsbereich sind insbesondere die Stege und die Aussparung in Bezug auf die Längsachse des Halteelements spiegelsymmetrisch ausgebildet. Spiegelsymmetrisch bedeutet an dieser Stelle insbesondere, dass die obere Hälfte des Halteelements der unteren Hälfte gleicht, wenn diese um die Längsachse geklappt bzw. gespiegelt wird. Durch die gleichmäßige Anordnung der Stege und der Aussparung wird ein insgesamt homogenes Bauteil erzielt, welches insbesondere Vorteile bei der bereits weiter oben genannten Belastung durch Seitenkräfte bzw. Querkräfte bringt, wenn diese radseitig auf die Feder wirken. Zu der Anordnung der Stege und der Aussparung wird später noch gezielt eingegangen.

Aufgrund der spiegelsymmetrischen Ausbildung des Halteelementes ist auch die Außenkontur des Halteelementes spiegelsymmetrisch zur Längsachse ausgebildet. Dies ist insbesondere im vorderen Bereich des Halteelementes, der Fall, der von einer ersten Trennwand abgewandt ist. Im Wesentlichen gilt die Spiegelsymmetrie auch für die Außenkontur des Halteelementes in dem Federbefestigungsbereich, da auch die Außenkontur der Stege, die die Feder bzw. die Blattfeder umgreifen weitgehend symmetrisch ausgebildet ist. Die symmetrische Anordnung der Außenkontur ist dabei lediglich durch Löcher bzw. durch Bohrungen unterbrochen, die an wenigstens einem der Stege vorhanden sein können. Dieses hängt von der jeweiligen Befestigungsvariante ab. Wie weiter oben bereits gesagt, kommt z.B. eine Schraubverbindung in Frage. Bei einer durchgehenden Schraubverbindung sind Durchbohrungen in beiden Stegen notwendig. Soll als Befestigungsvariante eine Klemmung gelten bzw. eine einseitige Verschraubung, so ist die Außenkontur zumindest eines Steges im Federbefestigungsbereich durch eine Durchbohrung unterbrochen. In einer bevorzugten Ausführungsform sind die Stege im Federbefestigungsbereich lediglich annähernd spiegelsymmetrisch angeordnet. Wenn der Federbefestigungsbereich etwa keilförmig ausgebildet ist, so dass der Durchmesser wenigstens eines Steges des Federbefestigungsbereiches von der ersten Trennwand bis zum Ende des wenigstens einen Befestigungssteges abnimmt, kann ein keilförmiger Formschluss mit dem ebenfalls keilförmig ausgeführten Ende der Feder erreicht werden. Vorzugsweise ist dabei ein Steg so ausgeformt, dass dessen Innenkontur mit seiner Außenkontur einen Keil bildet, insbesondere einen Keil mit einer Steigung von 5°. Es hat sich gezeigt, das s bei einem derartig keilförmig ausgebildeten Formschluss eine einfache Verschraubung des Blattfederendes ausreichend ist. Es versteht sich, dass das keilförmig ausgeführte Ende der Blattfeder zu Montagezwecken seitlich in das Haltelement einzuführen ist, um dieses dann mittels der genannten einfachen Verschraubung zu sichern. Durch die der Feder zugewandte vordere Innenfläche an der ersten Trennwand kann sich die Feder in Querrichtung an dem Halteelement abstützen. Durch den keilförmigen Formschluss ist das Ende der Feder sicher in dem Halteelement aufgenommen.

Bevorzugt ist in dem vorderen Bereich des Halteelementes, also in dem vom Federbefestigungsbereich abgewandten Teil, die Außenkontur derart ausgebildet, dass diese zwei von der Längsachse abgewandte Erhebungen und ein dazwischenliegende, der Längsachse zugewandte Vertiefung aufweist. Dieses bedeutet, dass der senkrecht zur Längsachse gemessene Durchmesser des Halteelementes, im Bereich des Federbefestigungsbereiches zunächst gleichmäßig ist, um dann etwa ab der ersten Trennwand in Richtung Radträgerbefestigungsbereich zuzunehmen. Die gleichmäßige Zunahme des Durchmessers stellt sich durch eine Erhebung dar, die mit Blick auf die Außenkontur auch als Berg bezeichnet werden kann. Nach dieser Erhebung reduziert sich der Durchmesser gleichmäßig und bildet somit ein Tal. Nach dem Tal nimmt der Durchmesser wieder zu, bevorzugt nicht in dem Maße wie die erste Erhebung ausgeführt ist, um dann wieder abzunehmen, so dass die Außenkontur des Weiteren sich gleichmäßig reduziert, und parallel zu der Innenkontur der Ausnehmung im Radträgerbefestigungsbereich erfolgt. Ausgehend von den Befestigungsstegen im Federbefestigungsbereich erstrecken sich die vorgenannten Erhebungen mit anderen Worten wellenförmig mit zwei Wellenbergen und dazwischen liegendem Wellental. Der äußere Teil des Halteelementes ist somit gebildet von den Stegen im Befestigungsbereich, die auf die erste Trennwand zulaufen und mit dieser verbunden sind und an denen sich weitere äußere Stege mit der zuvor genannten Kontur erstrecken, die wellenförmig verlaufen und dann in den Radträgerbefestigungsbereich übergehen. Der Radträgerbefestigungsbereich ist durch eine Ausnehmung gebildet, und stellt eine runde, insbesondere kreisrunde Ausnehmung nach Art eines Lagerauges dar, wie dieses von z.B. bei Lenkern aus dem Fahrzeugfahrwerk bekannt ist.

Es wurde zuvor bereits gesagt, dass der Verformungsbereich zur Aufnahme von Seitenkräften vorgesehen ist. Der Verformungsbereich soll sich insbesondere plastisch verformen, wenn der Standardlastfall überschritten wird. Die besondere Ausformung der Außenkontur ist derart gewählt, dass sich der Verformungsbereich bei Einwirken einer Seitenkraft gezielt plastisch verformen kann. Insbesondere durch die wellenartige Anordnung der äußeren Stege bzw. der Weise der Außenkontur wird eine gezielte Aufnahme von eingetragenen radseitigen Kräften ermöglicht. Dieses ist insbesondere im Zusammenspiel mit der Anordnung der Stege und der Aussparungen von Vorteil, wie im Weiteren noch näher beschrieben wird. Durch die spezielle Anordnung der Stege und Aussparungen und die Wahl der Außenkontur wird ein Ausknicken des vorderen Teils des Halteelements, also des Radträgerbefestigungsbereiches und des Verformungsbereiches gegenüber dem Federbefestigungsbereich verhindert, so dass das durch die Ausnehmung aufgenommen Führungslager auf der Längsachse verbleibt. Mit anderen Worten ist das Halteelement so gestaltet, dass sich lastabhängig ein bestimmter Verformungsweg einstellt. Unter Ausknicken ist eine Bewegung quer zur Längsachse gemeint, wobei der Radträgerbefestigungsbereich sich im Extremfall auch um die anderen Bereich herumbewegen oder sogar abscheren könnte, was mit dem vorliegenden Halteelement vermieden werden soll.

Bevorzugt sind die Stege zwischen dem Radträgerbefestigungsbereich und dem Federbefestigungsbereich angeordnet, wobei sich die Aussparungen zumindest teilweise in den Radträgerbefestigungsbereich erstrecken. Der Federbefestigungsbereich ist durch die erste Trennwand von den zwei weiteren Bereichen getrennt. Der Verformungsbereich liegt zwischen der ersten Trennwand und der zweiten Trennwand, die vor der Ausnehmung endet. Der eigentliche Radträgerbefestigungsbereich erstreckt sich ausgehend von der zweiten Trennwand über die Ausnehmung bis zum radseitigen Ende des Halteelementes. Wenn sich Aussparungen teilweise in den Radträgerbefestigungsbereich erstrecken, so bedeutet dieses, dass die Aussparung nicht ausschließlich zwischen der ersten und der zweiten Trennwand angeordnet sind, sondern über die zweite Trennwand hinaus in Richtung des Radträgerbefestigungsbereiches sich erstrecken. Auch hierdurch ist gegeben, dass sich lastabhängig ein bestimmter Verformungsweg einstellt. Wenn in diesem Zusammenhang von Verformung gesprochen wird, so ist zunächst die Verformung in Richtung der Längsachse gemeint. Neben der Verformung in Querrichtung auf Grund von einwirkenden Querkräften, ist es aber auch von Vorteil, wenn sich bestimmte Bereiche des Halteelementes quer zur Längsachse in Vertikalrichtung bewegen können. Dieses wird neben der Ausformung der Außenkontur bzw. der äußeren Stege auch dadurch begünstigt, dass die Aussparung teilweise in den Radträgerbefestigungsbereich reichen.

Bevorzugt bilden die Stege im Verformungsbereich ein Kreuz, wobei zwei der Stege von einem gemeinsamen Kreuzungspunkt aus zunächst etwa in vertikaler Richtung verlaufen. Die Stege enden dann quasi an einer Aussparung und setzen sich dann in Richtung der zweiten Trennwand fort und gehen in diese über. Zwei der Stege erstrecken sich von dem genannten Kreuzungspunkt aus mit einem Winkel von etwa 45° in Bezug auf die Längsachse in Richtung der ersten Trennwand, wobei der Kreuzungspunkt auf der Längsachse liegt. Durch die spezielle Anordnung der Streben kann das Halteelement so ausgelegt werden, dass diese hohe Kräfte aus verschiedenen Richtungen aufnehmen kann, um so eine stabile Positionierung der Feder gegenüber dem Radträger zu ermöglichen. Wie zuvor bereits erläutert, erlauben die Streben bzw. deren besondere Anordnung eine definierte Verformung des Verformungsbereiches, wenn dieser hohen Seitenkräften bzw. Querkräften ausgesetzt ist. Durch die Anordnung der ersten und zweiten Trennwand der äußeren Stege und der inneren Stege ist eine Struktur geschaffen, die insbesondere durch ihre symmetrische Anordnung einen bestimmten lastabhängigen Verformungsweg ermöglicht.

Bevorzugt weist der vertikale Teil der Stege und die in Richtung der zweiten Trennwand abragenden Stege eine etwa gleiche Materialstärke, insbesondere eine gleiche Materialstärke auf. Unter Materialstärke der Streben ist der Querschnitt der Streben bzw. deren Breite zu verstehen. Form und Querschnitt der Streben sind dabei der zu übertragenden Kraft angepasst. Insbesondere weisen die Streben Richtungen auf, die eine bevorzugte Krafteinleitung ermöglichen, so dass nach Einwirken von Seitenkräften, die Ausnehmung entlang der Längsachse auf die Feder zu bewegt wird. Die Streben sind dabei derart ausgelegt, dass bei Einwirken einer Seitenkraft auf den Radträgerbefestigungsbereich der vertikale Teil der Stege als Zugstrebe und die in Richtung der ersten Trennwand abragenden Stege als Druckstrebe wirken. Durch die Auslegung der vertikalen Stege als Zugstrebe wird bei einwirkenden Seitenkräften auf den Radträgerbefestigungsbereich eine Verformung eingeleitet, die etwa quer, insbesondere quer zur Längsachse erfolgt. Die mit einem Winkel von etwa 45° in Bezug auf die Längsachse in Richtung der ersten Trennwand sich erstreckenden Stege ermöglichen sowohl eine Verformung in Richtung der Längsachse als auch in Richtung quer zur Längsachse. Der Verbund der Stege trägt somit dazu bei, dass bei Einwirken einer Seitenkraft die Ausnehmung bzw. der Radträger sich auf der Längsachse in Richtung Feder bzw. Federbefestigungsbereich bewegen kann.

Bevorzugt ist ausgehend vom Kreuzungspunkt bis zu der ersten Trennwand eine Aussparung in Form eines etwa gleichseitigen Dreiecks ausgebildet, wobei eine Seite in etwa vertikal und parallel zur ersten Trennwand verläuft. Die dreieckige Aussparung ist somit von der Trennwand und von den beiden nach hinten abragenden Stegen begrenzt. Auch diese Form der Aussparung trägt zur bevorzugten Verformungsbewegung entlang der Längsachse des Halteelements bei.

Bevorzugt ist auf der vom Dreieck abgewandten Seiten zwischen der zweiten Trennwand und der vertikalen Stege eine kreissegmentartige Aussparung gebildet und von diesen begrenzt, wobei sich ausgehend von den Enden der vertikalen Stege ein Kreisabschnitt in Richtung Radträgerbefestigungsbereich erstreckt. Die vertikale Breite der kreissegmentartigen Aussparung entspricht dabei etwa der vertikalen Breite der dreieckigen Aussparung bzw. des durch die Stege begrenzten Dreiecks. Es handelt sich hierbei um eine Aussparung, die zwischen der dreieckigen Aussparung und der Ausnehmung des Radträgerbefestigungsbereichs ausgebildet ist. Es ist offensichtlich, dass bei Einwirken einer Querkraft der Durchmesser der kreissegmentartigen Aussparung verringert wird. Auch mit der Formgebung dieser Aussparung wird eine Verformungsbewegung entlang der Längsachse forciert. Bevorzugt weist der Kreisabschnitt eine Formgebung auf, so dass dieser Kreisabschnitt parallel zu der Außenkontur des Halteelements und /oder parallel zur Kontur der Ausnehmung im Bereich der Längsachse verläuft.

In einer weiteren bevorzugten Ausführung erstrecken sich zwei Aussparungen vom Radträgerbefestigungsbereich beginnend etwa parallel zur Außenkontur des Halteelements bis in den Verformungsbereich, wobei die Aussparungen sich bis in einen Bereich zwischen den vertikalen Stegen und den in Richtung der ersten Trennwand abragenden Stegen erstrecken. Die Aussparungen sind ebenfalls symmetrisch zur Längsachse angeordnet. Diese Aussparungen erstrecken sich vom Verformungsbereich bis in den Radträgerbefestigungsbereich, wobei deren Innenkontur, die von der Längsachse abgewandt ist, teilweise parallel zur Außenkontur verläuft, insbesondere im Bereich der wellenförmigen Außenkontur, so dass diese parallel zu den beiden Erhebungen und der einen Vertiefung in der Außenkontur verlaufen. Die Aussparungen weisen eine etwa schlauchartige Form auf, wobei der Durchmesser entlang der Außenkontur variieren kann oder sich gleichmäßig über die Länge der Aussparung erstrecken kann. Diese Aussparungen sind ebenfalls daran beteiligt, dass es innerhalb des Verformungsbereiches nicht zu einer zuvor genannten Ausknickung kommt. Durch die Aussparung können die Stege, die außen an dem Halteelement verlaufen, sich bei Einwirken einer Längskraft gezielt verformen und ermöglichen ein Ausweichen des außen gelegenen Stegmaterials quer zur Richtung der Längsachse.

In einer bevorzugten Ausführungsform ragt in die zuvor genannten Aussparungen jeweils ein spiegelsymmetrisch zur Längsachse angeordneter Anschlag zwischen die vertikalen Stegen und die nach hinten schräg in Richtung der ersten Trennwand abragenden Stege hinein, der mit dem jeweiligen vertikalen Steg insbesondere dessen Endbereich zusammenwirkt, wenn auf den Radträgerbefestigungsbereich eine Seitenkraft einwirkt. Bevorzugt ist der Anschlag mit dem jeweils äußeren Steg verbunden und mit diesem einstückig ausgebildet, wobei die Außenkontur des Anschlags und die Innenkontur zwischen den vertikal und den in Richtung der ersten Trennwand abragenden Stege etwa parallel verlaufen. Die genannten Konturen (Innenkontur und Außenkontur) bilden mit anderen Worten die Spitze eines Doppelpfeils. Bei einer auf den Radträgerbefestigungsbereich wirkenden Seiten - oder Querkraft entlang der Längsachse erfolgt eine Verformung innerhalb des Verformungsbereiches, wobei wenigstens ein vertikaler Steg mit zunehmender Verformung mit dem jeweilig in seiner Nähe befindlichen Anschlag in Kontakt gelangt. Je nach Krafteinwirkung bzw. Richtung der Kraft ist über den Anschlag im Zusammenspiel mit dem vertikalen Steg ein Ausknicken des Radträgerbefestigungsbereichs bzw. Verformungsbereichs gegenüber dem Federbefestigungsbereich wirkungsvoll verhindert. Selbst wenn die einwirkende Kraft bzw. dessen Richtung derart von der Längsachse des Halteelements abweicht, so dass zunächst nur ein Anschlag mit einem Steg in Kontakt gerät, während der andere Vertikalsteg mit dem anderen Anschlag noch nicht in Kontakt ist, so erfolgt bei weiterer plastischer Verformung quasi ein Drehen oder Kippen um den bereits erfolgten Anschlag bzw. Anschlagpunkt, so dass bei weiterer plastischer Verformung um diesen Punkt gedreht in die entgegengesetzte Richtung verläuft, bis der andere vertikale Steg mit dem anderen vertikalen Anschlag in Kontakt gerät. So wird nicht nur ein Ausknicken bei einer von der Längsachse abweichenden Seitenkraft Richtung vermieden, sondern es wird weiterhin der lastabhängig bestimmte Verformungsweg beibehalten, so dass die Verformung entlang der Längsachse verläuft.

Bevorzugt ist der Anschlag bei unbelastetem Halteelement etwa parallel zum schräg Richtung erster Trennwand verlaufenden Steg angeordnet, insbesondere schließt der Anschlag zur Längsachse einen Winkel von annähernd 45°, vorzugsweise 45°ein. Mit dieser Formgebung wird das zuvor genan nte Verhalten des Radträgerbefestigungsbereiches gegenüber dem Federbefestigungsbereich forciert bzw. das Drehen bzw. das Kippen oder auch Zurückschwenken wird dadurch gezielt erreicht.

Ein Halteelement mit den vorgenannten Ausführungen und sich daraus ergebenden Wirkungen lässt sich in vorteilhafterweise bei einer Fahrzeugachse mit einer Blattfeder verwenden. Insbesondere eignet sich ein solches Halteelement für eine radführende Blattfeder, bei der die Seitenkräfte nicht durch zusätzliche oder übliche Querlenker abgefangen oder aufgenommen werden, sondern durch die Blattfeder allein.

Bevorzugt lässt sich das Halteelement gemäß den zuvor genannten Ausführungen aus Leichtmetall - Strangguss fertigen. Nach dem Strang Gießen kann je nach erforderliche Breite mit Rücksicht auf die zu verwendende Feder ein in der Breite entsprechendes Halteelement vom Strang abgetrennt bzw. vereinzelt werden. Es ergibt sich somit ein kostengünstiges Herstellverfahren für ein besonders vorteilhaftes Bauteil bei einer radführenden Blattfeder.

Bevorzugt weist der Radträgerbefestigungsbereich ein Lager wie ein Gummilager zur Befestigung bzw. gelenkigen Verbindung des Radträgers an dem Halteelement auf. Die Befestigung ist insbesondere eine elastische Befestigung. Ein solches Lager dient zur beweglichen Befestigung des Radträgers an dem Halteelement, so dass z.B. das Rad in Verbindung mit der radführenden Feder bzw. Querblattfeder über das Halteelement geführt und/oder gelenkt werden kann.

Das Lager kann dabei über Kraft- oder Formschluss in einer bevorzugt ringförmigen Aufnahme, welche durch das Halteelement gebildet ist, gehalten werden.

Das Halteelement kann Teil einer McPherson Hinterachse mit radführender Querblattfeder sein. Jedoch kann das Halteelement auch in anderen Achskonzepten mit radführender Querblattfeder oder Längsblattfeder sowie Federlenkern oder anderen Fahrwerksbauteilen oder Bauteilen, insbesondere aus Verbundwerkstoffen, insbesondere Faserverbundwerkstoffen, wie faserverstärkten Kunststoffen, verwendet werden.

Die Erfindung wird nachfolgend anhand bevorzugter Ausführungsformen unter Bezugnahme auf die Zeichnung beschrieben. In der Zeichnung zeigen:
Fig. 1 ein Fahrwerk,
Fig. 2 a, b, c ein Halteelement gemäß dem Stand der Technik,
Fig. 3 ein Halteelement gemäß der Erfindung in einer perspektivischen Darstellung mit einer Querblattfeder,
Fig. 4 das Halteelement gemäß Fig. 3 in Seitenansicht,
Fig. 5 ein mit einer Seiten- bzw. Querkraft belastet Halteelement gemäß Fig. 4,
Fig. 6 ein weiterbelastetes Halteelement gemäß Fig. 5.

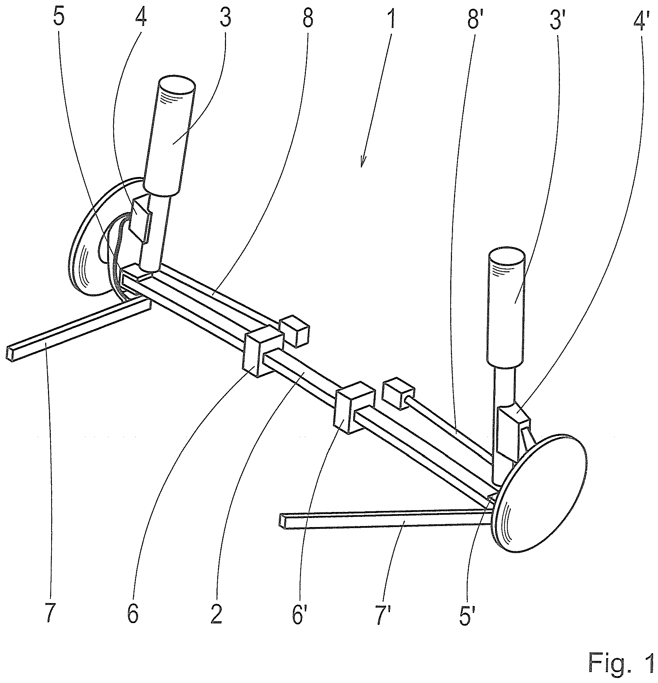

Fig. 1 zeigt ein Fahrwerk 1, wie es z. B. als Hinterachse in einem PKW verwendet werden kann. Das Fahrwerk weist 2 Radträger 4,4' auf, an welchen Räder über Radlager angebracht werden können. An den Radträgern 4,4' sind jeweils ein Längslenker 7,7' und ein Querlenker 8,8' befestigt. Dabei erstrecken sich die Längslenker 7,7' in etwa in Längsrichtung bzw. Fahrtrichtung des Fahrzeugs, die Querlenker 8,8' in etwa in Querrichtung, also quer zur Fahrtrichtung, des Fahrzeugs. Die Quer- und Längslenker sind jeweils mit einem Ende an dem Radträger befestigt, während das andere Ende an der Karosserie angeordnet ist.

Weiter weist das Fahrwerk zwei Dämpfer 3,3' auf, die ebenfalls mit einem Ende mit dem Radträger verbunden sind, während das andere Ende des Dämpfers 3,3' überlagert mit der Karosserie verbunden ist.

Während die Lenker 7,7' und 8,8' die Bewegungsbahn der Radträger 4,4' bezüglich der Karosserie festlegen, dämpfen die Dämpfer zusätzlich zur Radführung die Bewegung der Räder bzgl. der Karosserie, wenn diese von der Fahrbahn dazu angeregt werden.

Das Fahrwerk 1 umfasst von links nach rechts folgende Bauteile: Radträger 4, Halterung 5, Querblattfeder 2, Längslenker 7, Dämpfer 3, Querlenker 8, Blattfederhalter 6, Blattfederhalter 6', Querlenker 8', Dämpfer 3', Längslenker 7', Halterung 5', Radträger 4'.

Die beiden Radträger 4,4' sind über eine Feder 2, insbesondere eine Querblattfeder 2 verbunden, welche vorzugsweise aus einem Verbundmaterial wie glasfaserverstärkten Kunststoff bzw. faserverstärktem Kunststoff besteht. Die Querblattfeder 2 erstreckt sich quer zur Fahrzeughauptachse, d.h. in der Regel quer zur Fahrtrichtung, und ist über zwei Blattfederhalteelemente 6,6', die im mittleren Drittel der Querblattfeder angeordnet sein können, mit der Karosserie verbunden. Die Querblattfeder 2 ist über Halterungen 5,5' an den Enden mit den Radträgern 4,4' verbunden.

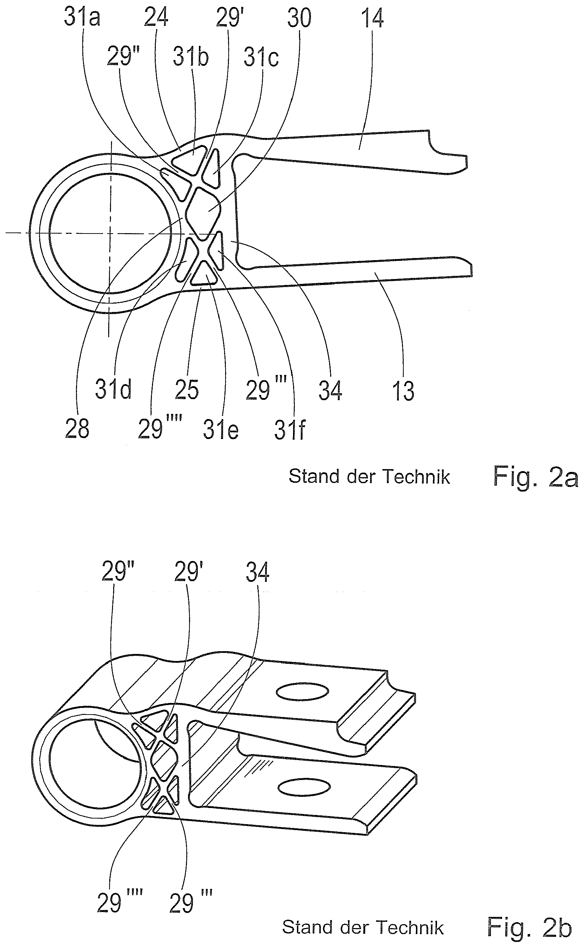

Fig. 2a zeigt eine Ausführungsform gemäß dem Stand der Technik eines Halteelementes 5. Dabei weisen die Stege 24,25 eine geringere Breite auf als die Stege 13 und 14 des Federbefestigungsbereiches, und sind über weitere Stege 29 mit der zweiten Trennwand 28 und der ersten Trennwand 34 verbunden. Die Stege 29 weisen die gleiche Breite bzw. Durchmesser auf, wie die Stege 24 und 25 und sind dabei winkelig zu den Stegen 24 und 25 angeordnet. Dabei verbindet ein Steg 29' den Steg 24 mit der zweiten Trennwand 28, ein Steg 29", den Steg 24 mit der ersten Trennwand 34, ein Steg 29'" den Steg 25 mit der zweiten Trennwand 28 und ein Steg 29"" den Steg 25 mit der ersten Trennwand 34. Dabei sind die Stege 29' und 29" und die Stege 29'" und 29"" miteinander verbunden und kreuzen sich in mehreren Punkten. Durch die Steganordnung ergibt sich im Verformungsbereich ein Zwischenraum 30 mit einem etwa viereckigen Querschnitt in der Mitte, der von 6 Zwischenräumen 31a, 31b, 31c, 31d, 31e, 31f mit einem in etwa dreieckförmigen Querschnitt benachbart ist.

Fig. 2b zeigt das Halteelement 5 nach der Fig. 2a in einer perspektivischen Ansicht.

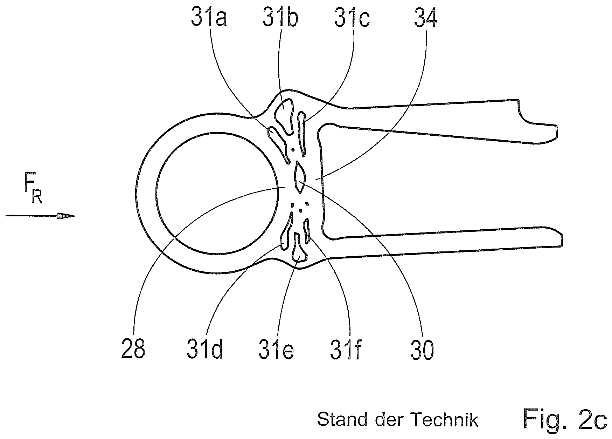

Fig. 2c zeigt ein Halteelement 5 nach Fig. 2a in einem verformten Zustand, nach einer übermäßigen Krafteinleitung durch eine radseitige Seiten- bzw. Querkraft. Dabei sind die Stege 24 und 25 unterschiedlich stark nach außen gebogen und die Zwischenräume bzw. Aussparungen 31a bis f sind unterschiedlich verformt zusammengedrückt. Allen drei Figuren 2a, 2b, 2c ist entnehmbar, das die Bauteile keine Längsachse in der Art besitzen, dass die Längsachse eine gemeinsame Symmetrieachse für ein spiegelsymmetrisch ausgebildetes Bauteil darstellen kann.

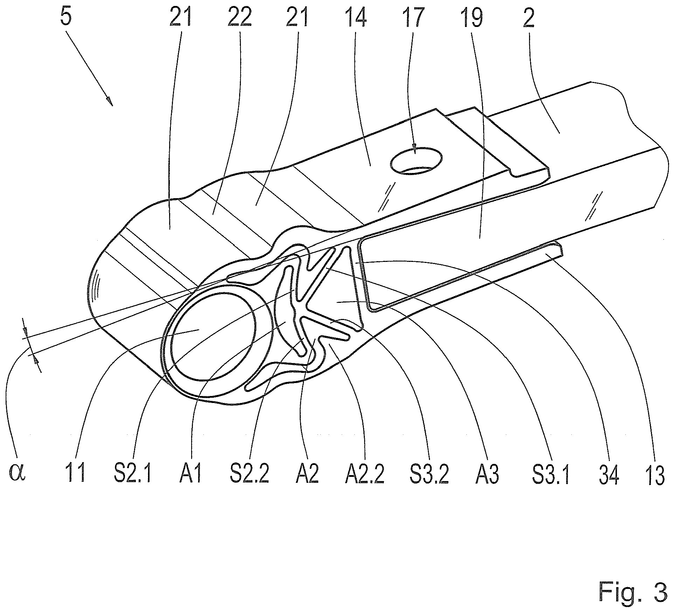

Fig. 3 zeigt eine perspektivische Darstellung eines Halteelements 5, welches mit im Federbefestigungsbereich eingebauter Querblattfeder 2 dargestellt ist. Der Federbefestigungsbereich erstreckt sich von der ersten Trennwand 34 bis an die Enden der Stege 13 und 14. Der Steg 14 ist keilförmig ausgebildet und ermöglicht so ein formschlüssiges sicheres Umgreifen des Endes der Feder 19. Zwischen der ersten Trennwand 19 und der Ausnehmung 11 ist der Verformungsbereich angeordnet. Auf den Verformungsbereich folgt der Radträgerbefestigungsbereich der um die Ausnehmung 11 herum angeordnet ist. In dem Verformungsbereich sind verschiedene Aussparungen vorhanden, nämlich eine dreieckige Aussparung A3, eine kreissegmentartige Aussparung A1, sowie zwei wellenförmig ausgeformte Aussparungen A2. Ist die Außenkontur im Bereich des Federbefestigungsbereiches, also die Außenkontur der Stege 13 und 14 flach ausgebildet, so ist im Weiteren die Außenkontur in Richtung Radträgerbefestigungsbereich 9 zur Ausnehmung 11 hin wellenförmig ausgeformt. Es der Fig. 3 entnehmbar, dass die Wellenform mit zwei Wellenbergen 21 und einem Wellental 22 ausgebildet ist. Innerhalb des Verformungsbereiches bzw. zwischen den Aussparungen A1, A2, A3 sind Stege S2.1, S2.2, angeordnet, die vertikal und in etwa parallel zur ersten Trennwand 34 verlaufen. Die vorgenannten Stege haben einen gemeinsamen Kreuzungspunkt K mit den weiteren Stegen S3.1 und S3.2, die von dem Kreuzungspunkt K aus schräg und in Richtung der Außenkontur sowie in Richtung der ersten Trennwand 34 abragen.

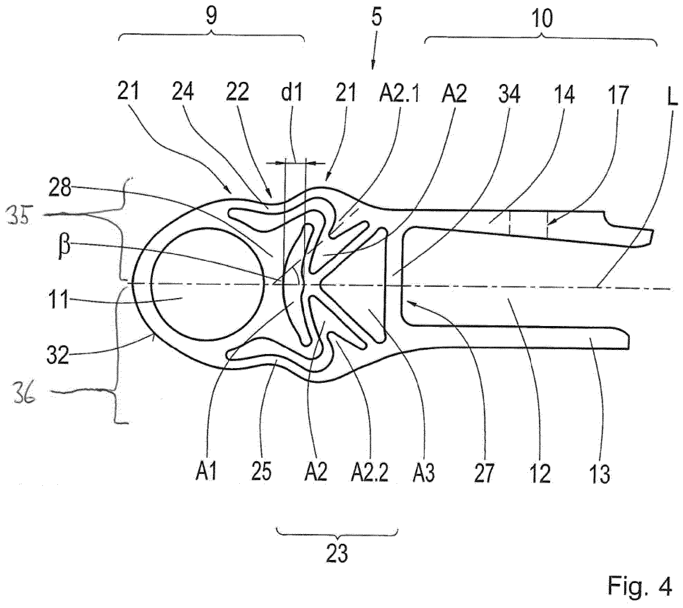

Fig. 4 stellt ein Halteelement 5 gemäß dem Halteelement in Fig. 3 dar, welches in Fig. 4 in Seitenansicht dargestellt ist. Der Fig. 4 ist wie auch der Fig. 3 eine Durchbohrung 17 in den einen Steg 14 entnehmbar. Diese eine Durchbohrung dient der kraftschlüssigen Befestigung des Endes der Querblattfeder 19 bzw. der Querblattfeder 2 in dem Halteelement. Es ist eine vordere Innenfläche 27 dargestellt, die als Stützfläche bzw. zur Aufnahme der Seitenkräfte vorgesehen ist, die durch den Radträger mittels der Ausnehmung 11 auf das Haltelement und somit die Querblattfeder wirken. Der Federbefestigungsbereich 10 erstreckt sich, wie schon zu Fig. 3 gesagt, von den Enden der Stege 13 und 14 bis zur ersten Trennwand 34. Der Verformungsbereich erstreckt sich von der ersten Trennwand 34 bis zur zweiten Trennwand 28 und ist nach außen durch die Stege 24 und 25 begrenzt, die, wie schon zur Fig. 3 gesagt, eine äußere Wellenform mit Wellenbergen bzw. Erhebungen 21 und einem dazwischen liegendem Wellental bzw. einer Vertiefung 22 versehen sind. Der Radträgerbefestigungsbereich schließlich reicht von der zweiten Trennwand 28 bis zur Außenkontur 32, die einen Kreisbogen darstellt, der in die Erhebung bzw. den Wellenberg 21 übergeht. Im Bereich der Außenkontur 32 verläuft diese mit ihrem Kreisbogen parallel zur Ausnehmung 11. Das Halteelement 5 weist eine Längsachse L auf, die gleichzeitig die Symmetrieachse für das weitgehend spiegelsymmetrische Halteelement 5 darstellt. Das Halteelement 5 ist ein spiegelsymmetrisch aufgebautes Bauteil, wobei die Spiegelsymmetrie bzgl. der Stege 13 und 14 sich nur auf deren Außenkonturen bezieht. Der Verformungsbereich ausgehend von der ersten Trennwand 34 bis zur Außenkontur 32 ist vollständig spiegelsymmetrisch ausgeführt. Wie auch der Fig. 3 entnehmbar, sind zwischen den Ausnehmungen A2 und der Außenkontur der Stege 24 und 25 Anschläge A2.1 und A2.2 angeordnet. In der gezeigten Darstellung sind die Anschläge quasi in Ruheposition. Sie ragen in die Aussparungen A2 hinein, und bilden mit der Längsachse L einen Winkel β von etwa 45°aus. Wenn hier von der Ruheposition der Anschlä ge A2.1 und A2.2 gesprochen wird, so ist gemeint, dass die Fig. 4 insgesamt ein Halteelement im unbelasteten bzw. normal belasteten Betriebsbereich zeigt (Standardlastfall). In dem normalen Betriebsbereich verformt sich das Halteelement 5 nicht dauerhaft, sondern reagiert auf Seitenkräfte elastisch. Erst wenn hohe Lasten auftreten, also Seitenkräfte, die als Missbrauchslast bezeichnet werden, verformt sich das Halteelement plastisch, also bleibend, was in den nachfolgenden Figuren dargestellt ist. Es ist in der Fig. 4 des Weiteren innerhalb der Aussparung A1 ein Durchmesser d1 dargestellt, dessen Maß den unverformten Zustand darstellt.

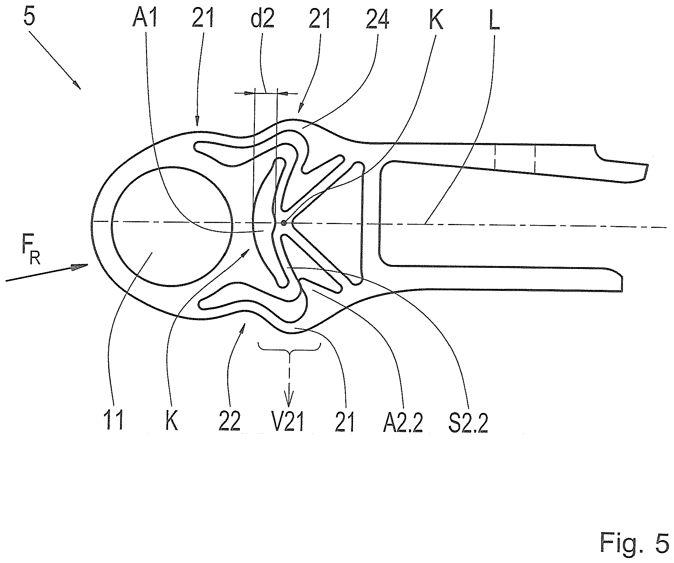

Fig. 5 zeigt eine Seitenansicht gemäß Fig. 4, wobei auf das Halteelement 5 eine Seitenkraft F_{R} eingewirkt hat, die im Bereich einer Missbrauchslast liegt. Es ist ersichtlich, dass die Last in etwa parallel zur Längsachse L verläuft. Es ist zum einen erkennbar, dass der Kreuzungspunkt K der Streben S2.1, S2.2, S3.1, S3.2 auf der Längsachse verbleibt. Der Durchmesser d₂ der Aussparung A1 ist gegenüber dem in Fig. 4 gezeigten Durchmesser d₁ reduziert. Der Anschlag A2.2 ist in Kontakt mit dem Ende des Steges S2.2, so dass die in der Fig. 5 gezeigte untere Aussparung A2 durch den Kontakt bzw. der Anlage der Flächen vom Anschlag A2.2 und Steg S2.2 geteilt ist. Es ist des Weiteren erkennbar, dass der unterhalb des Kreuzungspunktes K befindliche Wellenberg bzw. die Erhebung 21 sich von der Längsachse L gegenüber der Fig. 4 entfernt hat. Die Verformung V21 ist deutlich erkennbar, da die untere Erhebung 21 deutlich weiter von der Längsachse L abragt, als die obere Erhebung 21 oberhalb des Kreuzungspunktes, und somit das Halteelement 5 in diesem Stadium gegenüber der Längsachse L nicht mehr spiegelsymmetrisch ausgebildet ist.

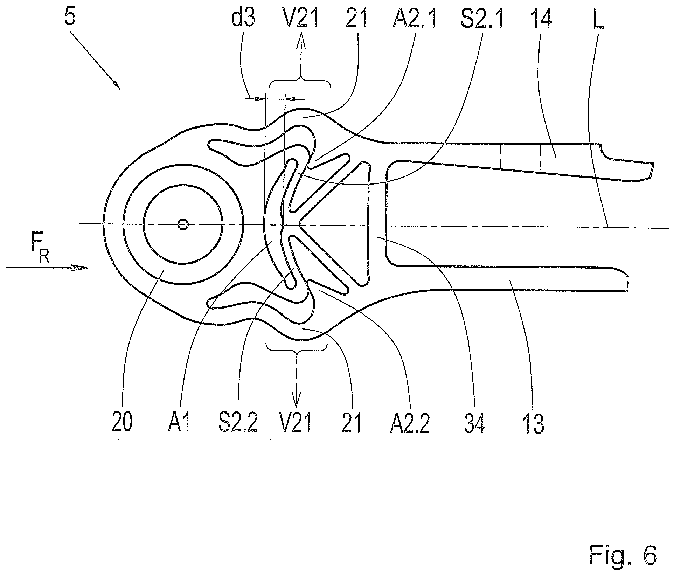

In Fig. 6 ist das Halteelement gemäß Fig. 5 nach weiterem Einwirken einer Missbrauchslast (Seitenkraft F_{R}) dargestellt. Der Durchmesser d₃ der Aussparung A1 ist deutlich weiter gegenüber der Darstellung in Fig. 5 reduziert. Das Halteelement 5 ist im Radträgerbefestigungsbereich 9 und Verformungsbereich 23 nun wieder symmetrisch gegenüber der Längsachse L. Die Erhebungen 21 oberhalb und unterhalb des Kreuzungspunktes K sind nun gleichmäßig verformt, da in diesem gezeigten Stadium beide Anschläge A2.1, A2.2 in Kontakt mit den vertikalen Stegen S2.1 , S2.2 gelangt sind. In dem in Fig. 6 gezeigten Stadium hat eine Verformung in der Weise stattgefunden, dass die Ausnehmung 11, an der der Radträger gelenkig angebunden ist, sich etwa 3 mm auf die erste Trennwand 34 zubewegt hat. Es ist ersichtlich, dass sich durch die Missbrauchslast das Halteelement nach einem vorgegebenen Verformungsweg verformt hat. Ein Ausknicken des Radträgerbefestigungsbereichs gegenüber dem Federbefestigungsbereich bzw. gegenüber der Feder hat nicht stattgefunden. Dies ist darin begründet, dass durch die Auslegung der Stege S2.1, S2.2, 24, 25 und der Aussparung A1, A2, A3 ein beabsichtigter Verformungsweg bei Missbrauchslasten auf das Halteelement 5 bzw. die Querblattfeder 2 verwirklichen lässt. Die Stege S3.1 und S3.2 wirken dabei als Druckstreben, wobei die Stege S2.1, S2.2 als Zugstreben wirken. In der Fig. 6 ist ein Gummilager 20 gezeigt, dass in der Ausnehmung 11 im Radträgerbefestigungsbereich eingepresst ist. Über das Gummilager 20 wird eine gelenkige Verbindung vom Radträgerbefestigungsbereich zum Radträger des Fahrzeugs hergestellt.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung, eine mechanische Umkehr der Funktionen der einzelnen mechanischen Elemente der Erfindung zu bewirken.

### Bezuaszeichen

- 1: Fahrwerk
- 2: Querblattfeder
- 3, 3': Dämpfer
- 4, 4': Radträger
- 5, 5': Halteelement
- 6, 6': Blattfederhalter
- 7, 7': Längslenker
- 8, 8': Querlenker
- 9: Radträgerbefestigungsbereich
- 10: Federbefestigungsbereich
- 11: Ausnehmung
- 12: Aufnahme
- 13: Steg
- 14: Steg
- 15: Innenfläche
- 16: Innenfläche
- 17: Durchbohrung
- 19: Ende der Feder
- 20: Gummilager
- 21: Erhebung, Wellenberg
- 22: Vertiefung, Wellental
- 23: Verformungsbereich
- 24: Steg
- 25: Steg
- 26: Außenfläche
- 27: vordere Innenfläche
- 28: zweite Trennwand
- 29: Wand
- 29': Wand
- 29": Wand
- 29"': Wand
- 29"": Wand
- 31 a: Zwischenraum
- 31 b: Zwischenraum
- 31 c: Zwischenraum
- 31 d: Zwischenraum
- 31 e: Zwischenraum
- 31 f: Zwischenraum
- 32: Außenkontur
- 34: erste Trennwand
- 35: obere Hälfte
- 36: untere Hälfte
- A1: Aussparung
- A2: Aussparung
- A3: Aussparung, Dreieck
- A2.1: Anschlag
- A2.2: Anschlag
- A3: Aussparung
- d1: Durchmesser
- d2: Durchmesser
- d3: Durchmesser
- S2.1: Steg
- S2.2: Steg
- S3.1: Steg
- S3.2: Steg
- V21: Verformung
- K: Kreuzungspunkt
- L: Längsachse, Symmetrieachse
- α: Keilwinkel
- β: Winkel

## Patentansprüche

1. Halteelement für eine Feder, insbesondere Blattfeder, wobei das Halteelement (5) genau zwei Befestigungsbereiche (9, 10) aufweist, nämlich einen Federbefestigungsbereich (10) zur Befestigung der Feder (2) an dem Halteelement (5) mittels dem Federbefestigungsbereich (10) zugeordneter erster Stege (13, 14), um die Feder (2) zu umgreifen, und einen Radträgerbefestigungsbereich (9) zur Befestigung eines Radträgers (4) an der Feder (2), wobei das Halteelement (5) einen mit zweiten Stegen und Aussparungen durchsetzten Verformungsbereich (23) zur Kraftübertragung von dem Federbefestigungsbereich (10) auf den Radträgerbefestigungsbereich (9) aufweist, **dadurch gekennzeichnet, dass** die Feder (2) in Bezug auf eine das Halteelement (5) in eine obere (35) und eine untere Hälfte (36) gliedernde Symmetrieebene von einem oberen ersten Steg (14) oberhalb und von einem unteren ersten Steg (13) unterhalb dieser Symmetrieebene umgriffen wird, wobei die zweiten Stege (S2.1, S2.2, S3.1, S3.2) und die Aussparungen (A1, A2, A3) spiegelsymmetrisch in Bezug auf die Symmetrieebene ausgebildet sind, so dass zweite Stege (S2.1, S3.1) und Aussparungen (A2), die der oberen Hälfte (35) des Halteelements (5) zugeordnet sind, spiegelbildlich verlaufen zu zweiten Stegen (S2.2, S3.2) und Ausparungen (A2), die der unteren Hälfte (36) des Halteelements (5) zugeordnet sind.

2. Halteelement für eine Feder nach Anspruch 1,
**dadurch gekennzeichnet, dass** eine Außenkontur (21, 22, 32) das Halteelement (5) zumindest in einem vorderen, von einer ersten Trennwand (34) abgewandten Bereich spiegelsymmetrisch zur Längsachse (L) ausgebildet ist.

3. Halteelement für eine Feder nach Anspruch 1 oder 2,
**dadurch gekennzeichnet, dass** die Außenkontur zwei von der Längsachse abgewandte Erhebungen (21) und eine dazwischen liegende, der Längsachse zugewandte Vertiefung (22) aufweist.

4. Halteelement für eine Feder nach Anspruch 1 bis 3,
**dadurch gekennzeichnet, dass** die zweiten Stege (S2.1, S2.2, S3.1, S3.2) zwischen dem Radträgerbefestigungsbereich (9) und dem Federbefestigungsbereich (10) angeordnet sind, wobei sich die Aussparungen (A2) zumindest teilweise in den Radträgerbefestigungsbereich (9) erstrecken.

5. Halteelement für eine Feder nach einem der Ansprüche von 1 bis 4,
**dadurch gekennzeichnet, dass** die zweiten Stege (S2.1, S2.2, S3.1, S3.2) ein Kreuz bilden, wobei zwei der zweiten Stege (S2.1, S2.2) von dem gemeinsamen Kreuzungspunkt (K) aus zunächst in etwa vertikaler Richtung verlaufen und sich dann in Richtung der zweiten Trennwand (28) fortsetzen und in diese übergehen, und zwei der zweiten Stege (S3.1, S3.2) sich von diesem Kreuzungspunkt (K) aus mit einem Winkel von etwa 45° in Richtung einer ersten Trennwand (34) erstrecken, wobei der Kreuzungspunkt (K) auf der Längsachse (L) liegt.

6. Halteelement für eine Feder nach einem der Ansprüche von 1 bis 5,
**dadurch gekennzeichnet, dass** der vertikale Teil der zweiten Stege (S2.1, S2.2) und die in Richtung der ersten Trennwand (34) abragenden zweiten Stege (S3.1, S3.2) eine etwa gleiche Materialstärke, insbesondere eine gleiche Materialstärke aufweisen.

7. Halteelement für eine Feder nach einem der Ansprüche von 1 bis 6,
**dadurch gekennzeichnet, dass** bei Einwirken einer Seitenkraft (F_{R}) auf den Radträgerbefestigungsbereich (9) der vertikale Teil der zweiten Stege (S2.1, S2.2) als Zugstrebe und die in Richtung der ersten Trennwand (34) abragenden zweiten Stege (S3.1, S3.2) als Druckstrebe wirken.

8. Halteelement für eine Feder nach Anspruch 5 bis 7,
**dadurch gekennzeichnet, dass** ausgehend vom Kreuzungspunkt (K) bis zu der ersten Trennwand (34) eine Aussparung (A3) in Form eines etwa gleichseitigen Dreiecks ausgebildet ist, wobei eine Seite in etwa vertikal und parallel zur ersten Trennwand (34) verläuft.

9. Halteelement für eine Feder nach Anspruch 7 bis 8,
**dadurch gekennzeichnet, dass** auf der vom Dreieck (A3) abgewandten Seite zwischen der zweiten Trennwand (28) und den vertikalen zweiten Stegen (S2.1, S2.2) eine kreissegmentartige Aussparung (A1) gebildet und von diesen begrenzt ist, und sich ausgehend von den Enden der vertikalen zweiten Stege (S2.1, S2.2) ein Kreisabschnitt K in Richtung Radträgerbefestigungsbereich (9) erstreckt.

10. Halteelement für eine Feder nach einem der Anspruch 9,
**dadurch gekennzeichnet, dass** der Kreisabschnitt (K) parallel zu der Außenkontur des Haltelements und/oder parallel zur Ausnehmung (11) verläuft.

11. Halteelement für eine Feder nach einem der vorher genannten Ansprüche, **dadurch gekennzeichnet, dass**
die zwei Aussparungen (A2) sich vom Radträgerbefestigungsbereich (9) beginnend etwa parallel zur Außenkontur des Haltelements bis in den Verformungsbereich (23) erstrecken, wobei die Aussparungen (2) sich bis in einen Bereich zwischen den vertikalen zweiten Stegen (S2.1, S2.2) und den in Richtung der ersten Trennwand (34) abragenden zweiten Stegen (S3.1, S3.2) erstrecken.

12. Halteelement für eine Feder nach Anspruch 11,
**dadurch gekennzeichnet, dass** in die Aussparung (2) zwischen den zweiten Stegen (S2.1, S3.1; S2.2, S3.2) jeweils ein spiegelsymmetrisch zur Längsachse (L) angeordneter Anschlag (A2.1, A2.2) hineinragt, der mit dem jeweiligen vertikalen zweiten Steg (S2.1, S2.2), insbesondere dessen Endbereich, zusammenwirkt, wenn auf den Radträgerbefestigungsbereich (9) eine Seitenkraft (F_{R}) einwirkt.

13. Halteelement für eine Feder nach Anspruch 11 oder 12,
**dadurch gekennzeichnet, dass** der Anschlag (A2.1, A2.2) mit einem äußeren Steg (24, 25) wirkverbunden und mit diesem einstückig ausgebildet ist, wobei die Außenkontur des Anschlags (A2.1, A2.2) und die Innenkontur zwischen den vertikalen zweiten Stegen (S2.1, S2.2) und den in Richtung der ersten Trennwand (34) abragenden zweiten Stege (S3.1, S3.2) etwa parallel verlaufen.

14. Halteelement für eine Feder nach Anspruch 12 bis 13,
**dadurch gekennzeichnet, dass** der Anschlag (A2.1, A2.2) bei unbelastetem Haltelement (5) etwa parallel zum zweiten Steg (S3.1, S3.2) angeordnet ist, insbesondere zur Längsachse (L) einen Winkel von etwa 45°, vorzugweise 45° einschließt.

15. Verwendung eines Halteelements nach einem der vorangehenden Ansprüche in einer Fahrzeugsachse mit einer Blattfeder, insbesondere radführenden Blattfeder.

16. Verfahren zur Herstellung eines Halteelements für Blattfedern nach einem der vorher genannten Ansprüche, **dadurch gekennzeichnet, dass** das Halteelement aus Leichtmetall-Strangguss gefertigt ist.

## Claims

1. Holding element for a spring, in particular a leaf spring, the holding element (5) having precisely two fastening regions (9, 10), namely a spring fastening region (10) for fastening the spring (2) to the holding element (5) by means of first webs (13, 14) which are assigned to the spring fastening region (10), in order to engage around the spring (2), and a wheel support fastening region (9) for fastening a wheel support (4) to the spring (2), the holding element (5) having a deformation region (23) which is penetrated with second webs and cut-outs for the transmission of force from the spring fastening region (10) to the wheel support fastening region (9), **characterized in that**, in relation to a plane of symmetry which subdivides the holding element (5) into an upper half (35) and a lower half (36), the spring (2) is engaged around by an upper first web (14) above the said plane of symmetry and by a lower first web (13) below the said plane of symmetry, the second webs (S2.1, S2.2, S3.1, S3.2) and the cut-outs (A1, A2, A3) being of mirror-symmetrical configuration in relation to the plane of symmetry, with the result that second webs (S2.1, S3.1) and cut-outs (A2) which are assigned to the upper half (35) of the holding element (5) run in a mirror-inverted manner with respect to second webs (S2.2, S3.2) and cut-outs (A2) which are assigned to the lower half (36) of the holding element (5).

2. Holding element for a spring according to Claim 1, **characterized in that** an external contour (21, 22, 32) of the holding element (5) is of mirror-symmetrical configuration with respect to the longitudinal axis (L) at least in a front region which faces away from a first dividing wall (34).

3. Holding element for a spring according to Claim 1 or 2, **characterized in that** the external contour has two elevations (21) which face away from the longitudinal axis and a depression (22) which lies in between and faces the longitudinal axis.

4. Holding element for a spring according to Claims 1 to 3, **characterized in that** the second webs (S2.1, S2.2, S3.1, S3.2) are arranged between the wheel support fastening region (9) and the spring fastening region (10), the cut-outs (A2) extending at least partially into the wheel support fastening region (9).

5. Holding element for a spring according to one of Claims 1 to 4, **characterized in that** the second webs (S2.1, S2.2, S3.1, S3.2) form a cross, two of the second webs (S2.1, S2.2) extending from the common intersection point (K) first of all in an approximately vertical direction, and then continuing in the direction of the second dividing wall (28) and merging into the latter, and two of the second webs (S3.1, S3.2) extending from the said intersection point (K) at an angle of approximately 45° in the direction of a first dividing wall (34), the intersection point (K) lying on the longitudinal axis (L).

6. Holding element for a spring according to one of Claims 1 to 5, **characterized in that** the vertical part of the second webs (S2.1, S2.2) and the second webs (S3.1, S3.2) which protrude in the direction of the first dividing wall (34) have an approximately identical material thickness, in particular have an identical material thickness.

7. Holding element for a spring according to one of Claims 1 to 6, **characterized in that**, if a lateral force (F_{R}) acts on the wheel support fastening region (9), the vertical part of the second webs (S2.1, S2.2) acts as a tie rod and the second webs (S3.1, S3.2) which protrude in the direction of the first dividing wall (34) act as a compression strut.

8. Holding element for a spring according to Claims 5 to 7, **characterized in that**, starting from the intersection point (K), a cut-out (A3) in the form of an approximately equilateral triangle is configured as far as the first dividing wall (34), one side running approximately vertically and parallel to the first dividing wall (34).

9. Holding element for a spring according to Claims 7 and 8, **characterized in that** a circular segment-like cut-out (A1) is formed between the second dividing wall (28) and the vertical second webs (S2.1, S2.2), on the side which faces away from the triangle (A3), and is delimited by them, and a circular section K extends in the direction of the wheel support fastening region (9), starting from the ends of the vertical second webs (S2.1, S2.2).

10. Holding element for a spring according to one of Claim 9, **characterized in that** the circular section (K) runs parallel to the external contour of the holding element and/or parallel to the recess (11).

11. Holding element for a spring according to one of the abovementioned claims, **characterized in that**, starting from the wheel support fastening region (9), the two cut-outs (A2) extend approximately parallel to the external contour of the holding element as far as into the deformation region (23), the cut-outs (2) extending as far as into a region between the vertical second webs (S2.1, S2.2) and the second webs (S3.1, S3.2) which protrude in the direction of the first dividing wall (34).

12. Holding element for a spring according to Claim 11, **characterized in that** in each case one stop (A2.1, A2.2) which is arranged mirror-symmetrically with respect to the longitudinal axis (L) protrudes into the cut-out (2) between the second webs (S2.1, S3.1; S2.2, S3.2), which stop (A2.1, A2.2) interacts with the respective vertical second web (S2.1, S2.2), in particular the end region thereof, if a lateral force (F_{R}) acts on the wheel support fastening region (9).

13. Holding element for a spring according to Claim 11 or 12, **characterized in that** the stop (A2.1, A2.2) is operatively connected to an outer web (24, 25) and is configured in one piece with the latter, the external contour of the stop (A2.1, A2.2) and the internal contour between the vertical second webs (S2.1, S2.2) and the second webs (S3.1, S3.2) which protrude in the direction of the first dividing wall (34) running approximately in parallel.

14. Holding element for a spring according to Claims 12 and 13, **characterized in that**, in the case of an unloaded holding element (5), the stop (A2.1, A2.2) is arranged approximately parallel to the second web (S3.1, S3.2), in particular encloses an angle of approximately 45°, preferably 45°, with respect to the longitudinal axis (L).

15. Use of a holding element according to one of the preceding claims in a vehicle axle having a leaf spring, in particular a wheel-controlling leaf spring.

16. Method for producing a holding element for leaf springs according to one of the abovementioned claims, **characterized in that** the holding element is manufactured from continuously cast light metal.

## Revendications

1. Élément de retenue pour un ressort, en particulier un ressort à lame, dans lequel l'élément de retenue (5) présente exactement deux régions de fixation (9, 10), à savoir une région de fixation de ressort (10) pour la fixation du ressort (2) à l'élément de retenue (5) au moyen de premières nervures (13, 14) associées à la région de fixation de ressort (10), afin de venir en prise autour du ressort (2), et une région de fixation de support de roue (9), pour la fixation d'un support de roue (4) au ressort (2), l'élément de retenue (5) présentant une région de déformation (23) traversée par des deuxièmes nervures et des évidements pour le transfert de force de la région de fixation de ressort (10) à la région de fixation de support de roue (9),
**caractérisé en ce que** le ressort (2), par rapport à un plan de symétrie divisant l'élément de retenue (5) en une moitié supérieure (35) et une moitié inférieure (36), étant mis en prise sur son pourtour par une première nervure supérieure (14) au-dessus de ce plan de symétrie et par une première nervure inférieure (13) en dessous de ce plan de symétrie, les deuxièmes nervures (S2.1, S2.2, S3.1, S3.2) et les évidements (A1, A2, A3) étant réalisés avec une symétrie spéculaire par rapport au plan de symétrie de telle sorte que des deuxièmes nervures (S2.1, S3.1) et des évidements (A2) qui sont associés à la moitié supérieure (35) de l'élément de retenue (5), s'étendent avec une symétrie spéculaire par rapport à des deuxièmes nervures (S2.2, S3.2) et des évidements (A2), qui sont associés à la moitié inférieure (36) de l'élément de retenue (5).

2. Élément de retenue pour un ressort selon la revendication 1,
**caractérisé en ce qu'**un contour extérieur (21, 22, 32) de l'élément de retenue (5), au moins dans une région avant opposée à une première paroi de séparation (34), est réalisé avec une symétrie spéculaire par rapport à l'axe longitudinal (L).

3. Élément de retenue pour un ressort selon la revendication 1 ou 2,
**caractérisé en ce que** le contour extérieur présente deux rehaussements (21) opposés à l'axe longitudinal et un renfoncement (22) situé entre eux, tourné vers l'axe longitudinal.

4. Élément de retenue pour un ressort selon les revendications 1 à 3,
**caractérisé en ce que** les deuxièmes nervures (S2.1, S2.2, S3.1, S3.2) sont disposées entre la région de fixation de support de roue (9) et la région de fixation de ressort (10), les évidements (A2) s'étendant au moins en partie dans la région de fixation de support de roue (9).

5. Élément de retenue pour un ressort selon l'une quelconque des revendications 1 à 4, **caractérisé en ce que** les deuxièmes nervures (S2.1, S2.2, S3.1, S3.2) forment une croix, deux des deuxièmes nervures (S2.1, S2.2) s'étendant depuis le point d'intersection commun (K) d'abord dans une direction à peu près verticale, puis se poursuivant ensuite dans la direction de la deuxième paroi de séparation (28) et se prolongeant par celle-ci, et deux des deuxièmes nervures (S3.1, S3.2) s'étendant depuis ce point d'intersection (K) suivant un angle d'environ 45° dans la direction d'une première paroi de séparation (34), le point d'intersection (K) étant situé sur l'axe longitudinal (L).

6. Élément de retenue pour un ressort selon l'une quelconque des revendications 1 à 5,
**caractérisé en ce que** la partie verticale des deuxièmes nervures (S2.1, S2.2) et les deuxièmes nervures (S3.1, S3.2) faisant saillie dans la direction de la première paroi de séparation (34) présentent une épaisseur de matériau approximativement identique, en particulier une épaisseur de matériau identique.

7. Élément de retenue pour un ressort selon l'une quelconque des revendications 1 à 6,
**caractérisé en ce que** lors de l'application d'une force latérale (F_{R}) sur la région de fixation de support de roue (9), la partie verticale des deuxièmes nervures (S2.1, S2.2) agit en tant qu'entretoise de traction et les deuxièmes nervures (S3.1, S3.2) faisant saillie dans la direction de la première paroi de séparation (34) agissant en tant qu'entretoises de poussée.

8. Élément de retenue pour un ressort selon les revendications 5 à 7,
**caractérisé en ce qu'**à partir du point d'intersection (K) jusqu'à la première paroi de séparation (34), un évidement (A3) en forme de triangle approximativement équilatéral est réalisé, un côté s'étendant approximativement verticalement et parallèlement à la première paroi de séparation (34).

9. Élément de retenue pour un ressort selon les revendications 7 et 8,
**caractérisé en ce que** du côté opposé au triangle (A3), un évidement (A1) de type segment de cercle est formé entre la deuxième paroi de séparation (28) et les deuxièmes nervures verticales (S2.1, S2.2), et est limité par celles-ci, et une portion de cercle K s'étend dans la direction de la région de fixation de support de roue (9) à partir des extrémités des deuxièmes nervures verticales (S2.1, S2.2).

10. Élément de retenue pour un ressort selon l'une quelconque de la revendication 9,
**caractérisé en ce que** la portion de cercle (K) s'étend parallèlement au contour extérieur de l'élément de retenue et/ou parallèlement à l'évidement (11).

11. Élément de retenue pour un ressort selon l'une quelconque des revendications précédentes, **caractérisé en ce que**
les deux évidements (A2) s'étendent à partir de la région de fixation de support de roue (9) approximativement parallèlement au contour extérieur de l'élément de retenue jusque dans la région de déformation (23), les évidements (2) s'étendant jusque dans une région entre les deux nervures verticales (S2.1, S2.2) et les deuxièmes nervures (S3.1, S3.2) faisant saillie dans la direction de la première paroi de séparation (34).

12. Élément de retenue pour un ressort selon la revendication 11,
**caractérisé en ce que** dans l'évidement (2) entre les deux nervures (S2.1, S3.1; S2.2, S3.2) pénètrent à chaque fois une butée (A2.1, A2.2) disposée avec une symétrie spéculaire par rapport à l'axe longitudinal (L), laquelle coopère avec la deuxième nervure verticale respective (S2.1, S2.2), en particulier sa région d'extrémité, lorsqu'une force latérale (F_{R}) agit sur la région de fixation de support de roue (9).

13. Élément de retenue pour un ressort selon la revendication 11 ou 12,
**caractérisé en ce que** la butée (A2.1, A2.2) est en liaison fonctionnelle avec une nervure extérieure (24, 25) et est réalisée d'une seule pièce avec celle-ci, le contour extérieur de la butée (A2.1, A2.2) et le contour intérieur s'étendant approximativement parallèlement entre les deuxièmes nervures verticales (S2.1, S2.2) et les deuxièmes nervures (S3.1, S3.2) faisant saillie dans la direction de la première paroi de séparation (34).

14. Élément de retenue pour un ressort selon les revendications 12 et 13,
**caractérisé en ce que** la butée (A2.1, A2.2), lorsque l'élément de retenue (5) n'est pas sollicité, est disposée approximativement parallèlement à la deuxième nervure (S3.1, S3.2), en particulier forme avec l'axe longitudinal (L) un angle d'environ 45°, de préférence de 45°.

15. Utilisation d'un élément de retenue selon l'une quelconque des revendications précédentes dans un essieu de véhicule avec un ressort à lame, en particulier un ressort à lame guidant la roue.

16. Procédé de fabrication d'un élément de retenue pour des ressorts à lame selon l'une quelconque des revendications précédentes, **caractérisé en ce que** l'élément de retenue est fabriqué à partir de coulée continue en métal léger.
